# DEMANDE DE BREVET EUROPEEN

(11) **EP 2 299 182 A2**
(43) Date de publication de la demande: **23.03.2011**
(21) Numéro de dépôt: 10171783.3
(22) Date de dépôt: 03.08.2010
(51) Int. Cl.: F24D 3/14

(54) **Attache de conduite tubulaire à double ailettes anti-retour**

(30) Priorité: 25.08.2009 FR 0955779
(71) Demandeur: Societe ram Chevilles et Fixations, 91320 Wissous (FR)
(72) Inventeur: Sergent, Gilbert, 13610 Le Puy Sainte Réparade (FR)
(74) Mandataire: Gendron, Vincent Christian

(57) **Abrégé**

L'invention concerne une attache de conduite tubulaire pour plancher chauffant. L'attache comprend une branche d'ancrage (12 ) et une partie d'accrochage (14) surmontant ladite branche d'ancrage. La branche d'ancrage (12) comprenant une portion formant tige (18) terminée par une extrémité de perforation (20) et deux ailettes anti-retour flexibles (22, 24) solidaires de la portion formant tige (18). Lesdites deux ailettes anti-retour sont espacées l'une de l'autre entre ladite extrémité de perforation (20 ) et ladite partie d'accrochage (14), et elles sont aptes à s'écarter de ladite portion formant tige lorsque ladite branche d'ancrage est entraînée dans un sens opposé à son enfoncement dans ladite couche de support synthétique isolant. Ladite branche d'ancrage (12) comprend en outre un élément de liaison (26 ) qui relie mécaniquement ensemble lesdites ailettes anti-retour (22, 24) de façon à coupler le mouvement desdites deux ailettes anti-retour.

## Description

La présente invention se rapporte à une attache de conduite tubulaire, notamment pour les planchers chauffants à basse température.

Ce type de planchers chauffants est généralement réalisé en formant tout d'abord une première chape de béton que l'on recouvre d'une couche d'un support synthétique, du type mousse de polymères, par exemple en polyuréthane. Bien qu'alvéolée, cette couche est relativement dense pour pouvoir supporter une seconde chape de béton par dessus. Avant cela, un réseau de conduites tubulaires est fixé par des attaches sur cette couche synthétique de manière à pouvoir faire circuler un fluide caloporteur et notamment de l'eau chaude. Après que les conduites tubulaires ont été fixées sur cette couche synthétique, elles sont noyées dans le béton avec les attaches pour former le plancher d'un seul bloc.

Par ailleurs, les conduites tubulaires sont par exemple réalisées en polyéthylène réticulé et il est nécessaire de les maintenir sur le support synthétique avec lesdites attaches pour les conformer suivant des courbures prédéterminées. Ainsi, au fur et à mesure que la conduite tubulaire est déroulée et appliquée sur le support synthétique en empruntant un chemin prédéfini, elle est maintenue dans cette position au moyen desdites attaches. Ces attaches présentent une forme de cavalier comportant deux branches d'ancrage lesquelles présentent chacune une portion formant tige terminée par une extrémité de perforation. Ces extrémités de perforation sont équipées d'ailettes anti-retour et les attaches sont enfoncées à force à cheval sur la conduite tubulaire à travers le support synthétique. Les attaches sont également appelées agrafes, et elles sont installées au moyen d'une agrafeuse adaptée ou bien encore à la main. Les extrémités de perforation viennent alors s'ancrer dans ce support, tandis que la partie arrondie en forme de cavalier constitue une partie d'accrochage de la conduite tubulaire, et les ailettes anti-retour, tel un harpon, viennent limiter les capacités d'extraction de l'agrafe. En effet, les forces résiduelles persistant dans la conduite déroulée tendent, dans certaines circonstances, à provoquer l'extraction des agrafes.

En outre, il a été imaginé de perfectionner ces agrafes pour permettre un meilleur ancrage dans la couche de support synthétique. On pourra notamment se référer au document DE29812237, lequel décrit un tel type d'agrafes où les extrémités de perforation présentent respectivement deux paires d'ailettes anti-retour espacées l'une de l'autre selon la direction de la portion formant tige. Toutefois, la première paire d'ailettes anti-retour située vers la pointe de l'extrémité de perforation s'enfonce dans le support synthétique et y forme un chemin de passage qu'emprunte à son tour la seconde paire d'ailettes anti-retour, sans contrainte. Ainsi, si ladite première paire d'ailettes anti-retour constitue un ancrage satisfaisant, car les extrémités libres de ses ailettes anti-retour viennent en prise contre les parois du chemin de passage lorsque le tube exerce des efforts en sens inverse de l'agrafage sur l'attache, il n'en est pas de même de la seconde paire d'ailes anti-retour, dont les extrémités libres tendent à être entraînées en frottement contre lesdites parois sans même s'arc-bouter et offrir de résistance.

Aussi, un problème qui se pose et que vise à résoudre la présente invention, est d'améliorer la résistance à l'arrachement des attaches présentant au moins deux ailettes anti-retour espacées l'une de l'autre entre l'extrémité de perforation et la partie d'accrochage de l'attache.

Dans le but de résoudre ce problème, la présente invention propose une attache de conduite tubulaire pour plancher chauffant destinée à attacher une conduite tubulaire sur une couche de support synthétique isolant. Ladite attache comprend au moins une branche d'ancrage et une partie d'accrochage surmontant ladite au moins une branche d'ancrage, ladite au moins une branche d'ancrage comprenant une portion formant tige terminée par une extrémité de perforation et, au moins deux ailettes anti-retour flexibles solidaires de ladite portion formant tige aptes à s'étendre librement dans un sens opposé à ladite extrémité de perforation et selon deux directions sensiblement parallèles entre elles. Lesdites au moins deux ailettes anti-retour sont espacées l'une de l'autre entre ladite extrémité de perforation et ladite partie d'accrochage et lesdites au moins deux ailettes anti-retour étant aptes à fléchir en se rapprochant de ladite portion formant tige lorsque ladite branche d'ancrage est enfoncée dans ladite couche de support synthétique isolant et à s'écarter de ladite portion formant tige lorsque ladite branche d'ancrage est entraînée dans un sens opposé à son enfoncement dans ladite couche de support synthétique isolant. Selon l'invention, ladite branche d'ancrage comprend en outre un élément de liaison qui relie mécaniquement ensemble lesdites au moins deux ailettes anti-retour de façon à coupler le mouvement desdites au moins deux ailettes anti-retour lorsque l'une desdites au moins deux ailettes anti-retour est entraînée en mouvement, par quoi lesdites au moins deux ailettes anti-retour sont entraînées simultanément en mouvement lorsque ladite branche d'ancrage est entraînée à travers ladite couche de support synthétique.

Ainsi, une caractéristique de l'invention réside dans la mise en oeuvre d'un élément de liaison permettant une liaison mécanique entre les deux ailettes anti-retour espacées l'une de l'autre et superposées. De la sorte, lorsque l'attache est engagée à force à travers la couche de support synthétique, la branche d'ancrage s'y enfonce alors, et les deux ailettes anti-retour s'enfoncent également successivement et tendent à fléchir en se rapprochant de la portion formant tige. Dès lors, lorsque l'attache subit un effort en sens inverse de l'enfoncement de la branche d'ancrage, l'extrémité libre de l'ailette anti-retour située près de l'extrémité de perforation, tend à venir en prise dans la couche de support synthétique et à s'écarter sensiblement de la portion formant tige en entraînant avec elle l'autre ailette anti-retour par l'intermédiaire de l'élément de liaison. De la sorte, les deux ailettes anti-retour sont actives et offrent une résistance à l'arrachement de la branche d'ancrage. En outre, les deux ailettes anti-retour étant mécaniquement liées, le seul mouvement de pivotement de l'une d'entre elles, quelle qu'elle soit, par rapport à la portion formant tige, provoque le pivotement de l'autre ailette anti-retour.

Selon un mode de mise en oeuvre de l'invention particulièrement avantageux, ladite branche d'ancrage comprend en outre un lien flexible qui relie l'ailette anti-retour située vers ladite partie d'accrochage et ladite portion formant tige pour retenir ladite ailette anti-retour située vers ladite partie d'accrochage lorsqu'elle s'écarte de ladite portion formant tige. Ainsi, la mise en oeuvre d'un lien flexible entre l'ailette flexible et la portion formant tige, permet de retenir l'ailette flexible lorsque cette dernière tend à s'écarter de la portion formant tige dès que cette dernière est entraînée en translation dans un sens opposé à son enfoncement sous l'effet, par exemple, des forces résiduelles de la conduite tubulaire. Partant, l'ailette anti-retour située vers la partie d'accrochage étant retenue, l'autre ailette anti-retour située près de l'extrémité de perforation l'est légalement grâce à l'élément de liaison. De la sorte, contrairement aux attaches de l'art antérieur, où les ailettes anti-retour pouvaient s'écarter de la portion formant tige, au point d'être retournées à 180° lorsque l'attache subissait un effort relativement important dans un sens opposé à la couche de support synthétique, l'attache objet de l'invention interdit cette possibilité. Car en effet, les ailettes anti-retour sont maintenues inclinées par rapport à la portion formant tige, en formant un angle aigu grâce au lien flexible qui les retient à la portion formant tige.

En outre, grâce au lien flexible, on prévoit de réaliser des branches d'ancrage moins rigides et par conséquent plus minces, car la résistance au retournement des ailettes anti-retour est alors directement liée à la résistance en extension du lien flexible. Or, cette résistance était conférée, pour les attaches selon l'art antérieur, par un surplus de matériau. Ainsi, grâce à cette nouvelle configuration de branche d'ancrage, il est possible de réduire la quantité de matériau nécessaire à sa réalisation et par conséquent, d'en diminuer aussi le coût.

Par ailleurs, le lien flexible comporte avantageusement une languette présentant une zone médiane articulée formant genouillère pour autoriser de manière efficace, le pliage de ladite languette lorsque l'ailette est rapprochée de la portion formant tige durant l'enfoncement.

Préférentiellement, ladite branche d'ancrage présente en outre deux ailettes anti-retour flexibles complémentaires, respectivement symétriques desdites au moins deux ailettes anti-retour flexibles par rapport à ladite portion formant tige. Selon une variante de réalisation de l'invention particulièrement avantageuse, ladite branche d'ancrage comprend en outre un élément de liaison complémentaire qui relie mécaniquement ensemble lesdites deux ailettes anti-retour flexibles complémentaires. De la sorte, la résistance à l'extraction est sensiblement multipliée par deux. En outre, l'ailette anti-retour flexible complémentaire située vers la partie d'accrochage est reliée à la portion formant tige par l'intermédiaire d'un lien flexible complémentaire pour limiter l'écartement des ailettes anti-retour complémentaires vis-à-vis de la portion formant tige.

Selon une autre variante de réalisation ladite branche d'ancrage présente en outre, au moins une ailettes anti-retour intermédiaire flexible située entre lesdites au moins deux ailettes anti-retour, tandis que ledit élément de liaison relie d'une part ladite ailette anti-retour située vers ladite partie d'accrochage et ladite au moins une ailette anti-retour intermédiaire, et d'autre part, l'ailette anti-retour située vers ladite extrémité de perforation et ladite au moins une ailette anti-retour flexible intermédiaire. Ainsi, les trois ailettes anti-retour sont-elles liées mécaniquement entre elles par l'intermédiaire de l'élément de liaison. De la sorte, après enfoncement de la branche d'ancrage à travers la couche de support synthétique, les contraintes qui s'exercent à l'inverse dans le sens opposé à l'enfoncement, tendent à provoquer l'écartement simultané des trois ailettes anti-retour et ainsi, un ancrage en trois points dans la couche de support synthétique. Aussi, la résistance à l'arrachement en est-elle augmentée.

Avantageusement, lesdites au moins deux ailettes anti-retour présentent respectivement un amincissement local situé vers ladite portion formant tige pour autoriser le pivotement desdites au moins deux ailettes anti-retour autour de leur amincissement local. L'amincissement local permet notamment de faciliter le fléchissement des ailettes anti-retour en particulier lors de l'enfoncement, ce qui permet de diminuer l'énergie d'impact sur l'attache pour pouvoir l'ancrer à travers la couche de support synthétique.

Préférentiellement, lesdites ailettes anti-retour s'étendent en pointe vers ladite portion formant tige, de manière à favoriser l'introduction de la branche d'ancrage dans la couche de support synthétique. En outre, lesdites ailettes anti-retour s'étendent entre une extrémité de liaison sur ladite portion formant tige et une extrémité libre d'arrêt opposée, et ledit élément de liaison relie lesdites ailettes anti-retour entre leur extrémité de liaison et leur extrémité libre d'arrêt respective. Par exemple, ledit élément de liaison relie lesdites ailettes anti-retour sensiblement à égale distance entre l'extrémité de liaison et l'extrémité libre d'arrêt. Ainsi, l'élément de liaison et la demi-longueur d'ailettes forment avec la portion formant tige un parallélogramme déformable.

Selon un mode préféré de mise en oeuvre de l'invention l'attache comprend deux branches d'ancrage en regard reliées ensemble par la seule partie d'accrochage recourbée en formant cavalier.

D'autres particularités et avantages de l'invention ressortiront à la lecture de la description faite ci-après de modes de réalisation particuliers de l'invention, donnés à titre indicatif mais non limitatifs, en référence aux dessins annexés sur lesquels :
- la Figure 1 est une vue schématique partielle de face d'une attache de conduite conforme à l'invention selon un premier mode de mise en oeuvre;
- la Figure 2 est une vue schématique partielle de face d'une attache de conduite selon un deuxième mode de mise en oeuvre;
- la Figure 3 est une vue schématique partielle de face d'une attache de conduite selon un troisième mode de mise en oeuvre.

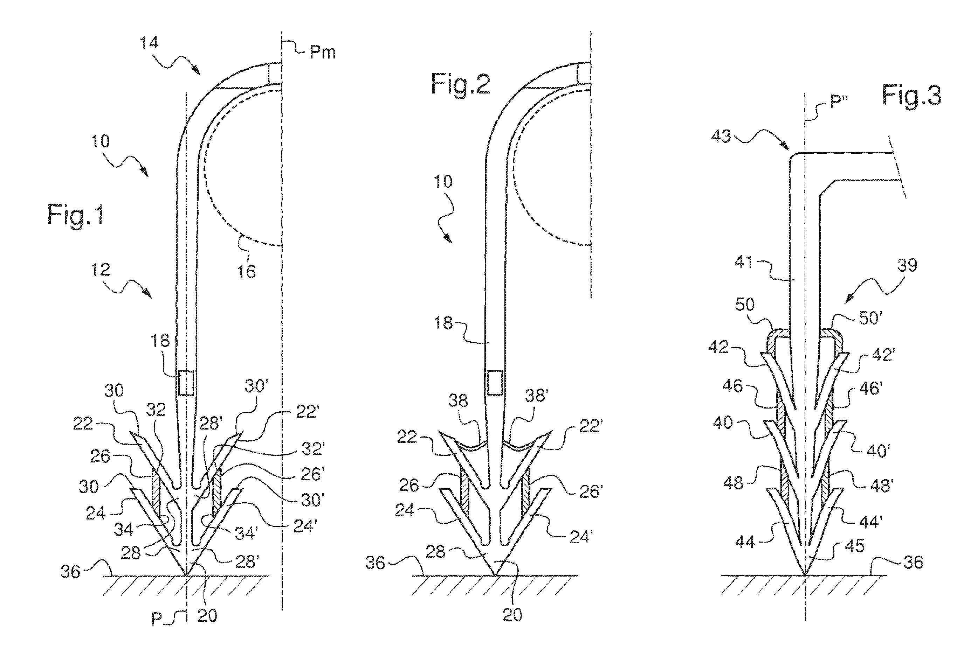

La Figure 1 illustre une attache 10 moulée d'une seule pièce en matière plastique, par exemple en polyamide ou en polyéthylène, munie d'une branche d'ancrage 12 et d'une partie d'accrochage 14. Cette partie d'accrochage 14 est recourbée vers la branche d'ancrage 12 de manière à pouvoir recevoir et maintenir une conduite tubulaire 16, ici représentée en traits interrompus.

La branche d'ancrage 12 comprend une tige 18 et une extrémité de perforation 20 en pointe située à l'extrémité libre de la tige 18. Elle comprend également deux ailettes anti-retour flexibles sensiblement parallèles et solidaires de la tige 18, l'une proximale 22 située vers la partie d'accrochage 14, l'autre distale 24 située vers l'extrémité de perforation 20. Ces deux ailettes anti-retour 22, 24 s'étendent librement l'une au-dessus de l'autre selon une direction parallèle au plan axial P de la tige 18. En outre, elles s'étendent sur la Figure 1 dans un sens opposé à l'extrémité de perforation 20 en formant un angle aigu avec le plan axial P, par exemple inférieur à 45° et plus avantageusement voisin de 30°. Selon l'invention, les deux ailettes anti-retour 22, 24 sont reliés mécaniquement ensemble par un élément de liaison 26 orienté sensiblement parallèlement à la tige 18. Les ailettes anti-retour 22, 24 s'étendent entre une extrémité de liaison 28 sur la tige 18, et une extrémité libre d'arrêt opposée 30 et elles sont aptes à pivoter précisément autour de leur extrémité de liaison 28. Avantageusement, les ailettes anti-retour 22, 24 présentent respectivement au niveau de leur extrémité de liaison 28 situé vers ladite tige 18, un amincissement local pour autoriser et faciliter le pivotement des deux ailettes anti-retour 22, 24.

Par ailleurs, l'élément de liaison 26, constitué d'une barrette moulée avec l'attache 10, est lui-même apte à pivoter au niveau de ses deux extrémités opposées 32, 34 respectivement sur les deux ailettes anti-retour 22, 24. On observera que les deux extrémités opposées 32, 34 de l'élément de liaison 26 sont respectivement solidaires des deux ailettes anti-retour 22, 24 sensiblement au niveau de leur demi-longueur. Ainsi, les deux ailettes anti-retour 22, 24 et l'élément de liaison 26, forment avec la tige 18 un parallélogramme déformable. En conséquence, la mise en mouvement de l'une ou l'autre des ailettes anti-retour 22, 24, dans des conditions que l'on décrira ci-après, selon un mouvement de pivotement entre une position rapprochée et une position écartée de la tige 18, provoque parallèlement le pivotement de l'autre ou l'une des ailettes anti-retour 22, 24.

Bien que l'attache 10 conforme à l'invention puisse fonctionner avec les deux seules ailettes anti-retour 22, 24 superposées, deux ailettes anti-retour flexibles complémentaires 22', 24' leur sont associées respectivement sur la tige 18 et symétriquement par rapport au plan axial P. Les éléments symétriques par rapport au plan axial P portent la même référence affectée du signe prime : « ' ». Aussi, les deux ailettes anti-retour flexibles complémentaires 22', 24' sont-elles reliées par un élément de liaison complémentaire 26'.

Ainsi, la branche d'ancrage 12 est destinée à être enfoncée dans une couche de support synthétique isolant 36 pour maintenir la conduite tubulaire 16 à distance de cette couche 36. Ainsi, l'extrémité de perforation 20 est appliquée contre la couche de support synthétique isolant 36 et la branche d'ancrage 12 est enfoncée à travers le support synthétique isolant 36 en maintenant sensiblement la tige 18 perpendiculaire à cette couche 36. Au cours de cet enfoncement, l'extrémité de perforation 20 perfore tout d'abord la couche de support 36 en la comprimant et ensuite, les ailettes anti-retour flexibles 22, 24 et symétriquement, 22', 24', pivotent respectivement autour de leur extrémité de liaison 28, 28' et se rabattent vers la tige 18 au fur et à mesure de l'enfoncement. On observera que, durant une première phase d'enfoncement où seules les ailettes anti-retour flexibles distales 24, 24' pénètrent dans le support synthétique isolant 36, et se rabattent vers la tige 18, les ailettes anti-retour flexibles proximales 22, 22' sont l'également rabattues vers la tige 18, pour autant que les éléments de liaison 26, 26' qui les entraînent respectivement soient rigides. Aussi, les ailettes anti-retour flexibles distales 24, 24' fraient un chemin de passage à travers la couche de support synthétique 36 tandis que les ailettes anti-retour flexibles proximales 22, 22' emprunte ce chemin de passage en offrant peu de résistance à l'enfoncement.

Lorsque l'enfoncement cesse et que les ailettes anti-retour flexibles distales 24, 24' et proximales 22, 22' sont enfoncées à travers la couche de support synthétique 36, cette dernière se relaxe sensiblement. Un avantage de l'invention réside en ce que les ailettes anti-retour flexibles distales 24, 24' sont respectivement liés en mouvement aux ailettes anti-retour flexibles proximales 22, 22'. Ainsi, lorsqu'un effort est exercé en sens inverse au sens d'enfoncement, sur la branche ancrage 12, les extrémités libres d'arrêt opposées 30, 30' des ailettes anti-retour flexibles distales 24, 24' viennent en prise respectivement sur les parois du chemin de passage ménagé à travers le support synthétique isolant 36. Et les ailettes anti-retour flexibles distales 24, 24' tendent alors à pivoter en s'écartant de la tige 18 et en pénétrant plus encore dans l'épaisseur de la couche de support synthétique 36 selon une direction perpendiculaire à la tige 18. Partant, le mouvement des ailettes anti-retour flexibles distales 24, 24' provoque alors un mouvement symétrique des ailettes anti-retour flexibles proximales 22, 22' grâces aux éléments de liaison 26, 26' qui les relient respectivement. Aussi, les extrémités libres d'arrêt opposées 30, 30' des ailettes anti-retour flexibles proximales 22, 22' viennent également en prise respectivement sur la paroi dudit chemin de passage. En conséquence, les ailettes anti-retour flexibles distales et proximales 24, 22 et respectivement les ailettes anti-retour flexibles complémentaires distales et proximales 24', 22' viennent s'ancrer selon une cinématique analogue et de manière identique dans l'épaisseur de la couche de support synthétique 36. Et partant, elles confèrent une plus grande résistance à l'arrachement à la branche ancrage 12.

En effet, les extrémités libres d'arrêt opposées 30, 30' des ailettes anti-retour flexibles proximales 22, 22' viennent plus difficilement en prise sur les parois du chemin de passage ménagé dans l'épaisseur de la couche de support synthétique isolant 36, car elles empruntent le chemin déjà façonné par les ailettes anti-retour flexibles distales 24, 24' qui elles, compte tenu de leur position vers l'extrémité de perforation 20, déchirent et perforent le matériau du support synthétique isolant 36.

Selon une variante d'exécution de l'invention non représentée, l'attache 10 est munie d'une deuxième branche d'ancrage totalement analogue à la première décrite ci-dessus et symétrique par rapport à un plan médian Pm. Aussi, l'attache forme alors un cavalier où la conduite tubulaire 16 est maintenue dans la partie d'accrochage arrondie du cavalier.

Selon un deuxième mode de mise en oeuvre de l'invention illustré sur la Figure 2 et sur laquelle on retrouve l'attache 10, les ailettes anti-retour flexibles proximales 22, 22' sont respectivement reliées à la tige 18 par un lien flexible 38, 38'. Ce lien flexible 38, 38' est constitué d'une languette présentant une zone médiane articulée formant genouillère et il permet non seulement d'éviter le retournement des ailettes anti-retour flexibles proximales 22, 22', mais aussi celui des ailettes anti-retour flexibles distales 24, 24' retenues par leur élément de liaison correspondant 26, 26'.

En effet, grâce au lien flexible, 38, 38', les ailettes anti-retour flexibles distales 24, 24' et proximales 22, 22' sont maintenues avec une inclinaison voisine de 30° par rapport à la tige 18 et elles ne peuvent se retourner vers l'extrémité de perforation 20. Elles conservent alors leur position de résistance à l'arrachement de la branche ancrage engagée dans la couche de support synthétique isolant 36.

On se reportera maintenant à la Figure 3, montrant une seconde attache conforme à l'invention, selon un troisième mode de mise en oeuvre. Pour des raisons de clarté, tous les éléments identiques au mode précédent de mise en oeuvre incluront dans leur dénomination le qualificatif : « seconde ». Cette seconde attache présente une seconde branche d'ancrage 39 comprenant une seconde tige 41. La seconde branche d'ancrage 39 comporte en outre une ailette anti-retour flexible intermédiaire 40, située entre une seconde ailette anti-retour proximale 42 située vers une seconde partie d'accrochage 43 et une seconde ailette anti-retour distale 44 située vers une seconde extrémité de perforation 45. L'attache comporte un second élément de liaison divisé en deux portions, une première portion de second élément de liaison 46 qui relie ensemble l'ailette anti-retour flexible intermédiaire 40 et la seconde ailette anti-retour proximale 42 et une seconde portion de second élément de liaison 48 qui relie ensemble l'ailette anti-retour flexible intermédiaire 40 et la seconde ailette anti-retour distale 44. En outre, et selon une variante représentée sur la Figure 3, la seconde ailette anti-retour proximale 42 est reliée à la seconde tige 41 par l'intermédiaire d'un second lien flexible 50. Ainsi, non seulement les trois ailettes anti-retour, la seconde ailette anti-retour proximale 42, l'ailette anti-retour intermédiaire 40 et la seconde ailette anti-retour distale 44 sont mécaniquement liées entre elles par l'intermédiaire des première et seconde portions d'élément de liaison 46, 48, mais au surplus ces ailettes anti-retour sont aptes à être maintenues écartées d'un angle aigu, préférentiellement inférieur à 45°, et par exemple de 30°, lorsque l'on tente d'arracher la seconde branche d'ancrage 39 de la couche de support synthétique isolant 36.

En outre, selon une autre variante représentée sur la Figure 3, les trois ailettes anti-retour, la seconde ailette anti-retour proximale 42, l'ailette anti-retour intermédiaire 40 et la seconde ailette anti-retour distale 44, sont respectivement associées à trois secondes ailettes anti-retour complémentaires 40', 42', 44' dont elles sont respectivement symétriques par rapport au second plan axial P". Elles sont en outre respectivement reliées deux à deux par une première portion de second élément de liaison complémentaire 46' et une seconde portion de second élément de liaison complémentaire 48'. Par ailleurs, et tel qu'illustré sur la Figure 3, la seconde ailette anti-retour proximale complémentaire 42' est reliée à la seconde tige 41 par un second lien flexible complémentaire 50'.

De plus, et selon un mode de mise en oeuvre non représenté, l'attache illustrée sur la Figure 3 est munie d'une deuxième seconde branche d'ancrage analogue à la première seconde branche ancrage 39 telle que décrite ci-dessus. La seconde partie d'accrochage 43 est constituée d'une partie en U d'un cavalier apte à recevoir une conduite tubulaire.

## Revendications

1. Attache de conduite tubulaire pour plancher chauffant destinée à attacher une conduite tubulaire sur une couche de support synthétique isolant, ladite attache comprenant au moins une branche d'ancrage (12 ; 39) et une partie d'accrochage (14 ; 43) surmontant ladite au moins une branche d'ancrage, ladite au moins une branche d'ancrage (12 ; 39) comprenant une portion formant tige (18 ; 41) terminée par une extrémité de perforation (20 ; 45) et, au moins deux ailettes anti-retour flexibles (22, 24 ; 42, 44) solidaires de ladite portion formant tige (18, 41) aptes à s'étendre librement dans un sens opposé à ladite extrémité de perforation et selon deux directions sensiblement parallèles entre elles, lesdites au moins deux ailettes anti-retour étant espacées l'une de l'autre entre ladite extrémité de perforation (20 ; 45) et ladite partie d'accrochage (14 ; 43), lesdites au moins deux ailettes anti-retour étant aptes à fléchir en se rapprochant de ladite portion formant tige (18 ;41) lorsque ladite branche d'ancrage (12 ; 39) est enfoncée dans ladite couche de support synthétique isolant (36) et à s'écarter de ladite portion formant tige lorsque ladite branche d'ancrage est entraînée dans un sens opposé à son enfoncement dans ladite couche de support synthétique isolant ;
**caractérisée en ce que** ladite branche d'ancrage (12, 39) comprend en outre un élément de liaison (26 ; 46, 48) qui relie mécaniquement ensemble lesdites au moins deux ailettes anti-retour (22, 24 ; 42, 44) de façon à coupler le mouvement desdites au moins deux ailettes anti-retour lorsque l'une desdites au moins deux ailettes anti-retour est entraînée en mouvement, par quoi lesdites au moins deux ailettes anti-retour (22, 24 ; 42, 44) sont entraînées simultanément en mouvement lorsque ladite branche d'ancrage (12, 39) est entraînée à travers ladite couche de support synthétique (36).

2. Attache selon la revendication 1, **caractérisée en ce que** ladite branche d'ancrage (12, 39) comprend en outre un lien flexible (38 ; 50) qui relie l'ailette anti-retour (22 ; 42) située vers ladite partie d'accrochage (14 ; 43) et ladite portion formant tige (18 ; 41) pour retenir ladite ailette anti-retour située vers ladite partie d'accrochage lorsqu'elle s'écarte de ladite portion formant tige.

3. Attache selon la revendication 2, **caractérisée en ce que** le lien flexible (38 ; 50) comporte une languette présentant une zone médiane articulée formant genouillère.

4. Attache selon l'une quelconque des revendications 1 à 3, **caractérisée en ce que** ladite branche d'ancrage (12 ; 39) présente en outre deux ailettes anti-retour flexibles complémentaires (22', 24' ; 42', 44'), respectivement symétriques desdites au moins deux ailettes anti-retour flexibles (22, 24 ; 42, 44) par rapport à ladite portion formant tige (18).

5. Attache selon la revendication 4, **caractérisée en ce que** ladite branche d'ancrage (12 ; 39) comprend en outre un élément de liaison complémentaire (26' ; 46', 48') qui relie mécaniquement ensemble lesdites deux ailettes anti-retour flexibles complémentaires (22', 24' ; 42', 44').

6. Attache selon l'une quelconque des revendications 1 à 5, **caractérisée en ce que** ladite branche d'ancrage (39) présente en outre au moins une ailettes anti-retour intermédiaire flexible (40, 40') située entre lesdites au moins deux ailettes anti-retour (42, 44, 42', 44'), tandis que ledit élément de liaison (46, 48, 46', 48') relie d'une part ladite ailette anti-retour (42, 42') située vers ladite partie d'accrochage (43) et ladite au moins une ailette anti-retour intermédiaire (40, 40'), et d'autre part, l'ailette anti-retour (44, 44') située vers ladite extrémité de perforation (45) et ladite au moins une ailette anti-retour flexible intermédiaire (40, 40').

7. Attache selon l'une quelconque des revendications 1 à 6, **caractérisée en ce que** lesdites au moins deux ailettes anti-retour (22, 24, 22', 24' ; 40, 42, 44, 40', 42', 44') présentent respectivement un amincissement local situé vers ladite portion formant tige (18 ; 41) pour autoriser le pivotement desdites au moins deux ailettes anti-retour autour de leur amincissement local.

8. Attache selon l'une quelconque des revendications 1 à 7, **caractérisée en ce que** lesdites ailettes anti-retour (22, 24, 22', 24' ; 40, 42, 44, 40', 42', 44') s'étendent en pointe vers ladite portion formant tige (18 ; 41).

9. Attache selon l'une quelconque des revendications 1 à 8, **caractérisée en ce que** lesdites ailettes anti-retour s'étendent entre une extrémité de liaison (28, 28') sur ladite portion formant tige et une extrémité libre d'arrêt opposée (30, 30'), et **en ce que** ledit élément de liaison relie lesdites ailettes anti-retour entre leur extrémité de liaison et leur extrémité libre d'arrêt respective.

10. Attache selon l'une quelconque des revendications 1 à 9, **caractérisée en ce qu'**elle comprend deux branches d'ancrage en regard reliées ensemble par la seule partie d'accrochage recourbée en formant cavalier.
